# EUROPEAN PATENT APPLICATION

(11) **EP 2 615 772 A1**
(43) Date of publication of application: **17.07.2013**
(21) Application number: 12305037.9
(22) Date of filing: 10.01.2012
(51) Int. Cl.: H04L 9/32

(54) **Method and device for timestamping data and method and device for verification of a timestamp**

(71) Applicant: Thomson Licensing, 92130 Issy-les-Moulineaux (FR)
(72) Inventor: Neumann, Christoph, 92443 Issy-Les-Moulineaux (FR); Onno, Stephane, 92443 Issy-Les-Moulineaux (FR); Heen, Olivier, 92443 Issy-Les-Moulineaux (FR)
(74) Representative: Ruellan-Lemonnier, Brigitte

(57) **Abstract**

An owner (310) timestamps data *f* by generating (S11) a set of domain names D from the data *f* and the 'timestamping' time t. The owner then sends (S12) resolution requests for the domain names D to one or more DNS servers. To verify a timestamp, a verifier (340) generates (S21) a set of domain names D from the data *f* and the 'timestamping' time t, sends (S22) resolution requests for the domain names D to the same DNS servers as the owner (310), receives (S23) resolution responses comprising TTL values, retrieves (S24) reference TTLs for the DNS servers and compares (S25) the current time with the 'timestamping' time *t* and, for each resolution response, the TTL and the reference TTL. If a predetermined ratio of comparisons match, then the timestamp is verified. Also provided are devices and computer program products.

## Description

### TECHNICAL FIELD

The present invention relates to timestamping of digital documents.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital timestamping can be defined as how to enable a principal p to prove a posteriori that at a given time *t* it knew digital data ***f*.**

In the digital world there are many situations that require reliable timestamping, i.e. proof that a certain file or document existed at a certain time. Examples of such situations include:
- on-line auctions, to ensure correct order of bids;
- electronic voting, to ensure that the vote was cast at an allowable time;
- publications, to prove that a document was published at a given time;
- on-line betting, to make sure that a bet is placed before the event;
   and
- Digital Rights Management, to ensure that an item of content is used only when allowed.

The prior art provides many different solutions related to time.

Network Time Protocol, NTP, is a common protocol for providing reliable time measure for events. It allows parties to estimate the simultaneity of events, or the time difference between events. However, it does not provide the ability to strongly link a proof of possession and a time indication.

Wikipedia's page on Trusted timestamping, http://en.wikipedia.org/wiki/ Trusted_timestamping, describes different solutions based on timestamping authorities. These solution rely on a trusted third party that provides the timestamp. In one solution, the third party receives a document, processes the document, e.g. by hashing the document together with the present time, in order to prove upon request when the document was timestamped. In another solution, a user sends a hash of the document to a third party that includes the hash in a hash tree, which enables timestamping; the document was clearly extant when the 'master' hash value was published.

BitCoin - see "A Peer-to-Peer Electronic Cash System", http://www.bitcoin.org/bitcoin.pdf - provides a timestamping server that adds a timestamp to each item to be timestamped, hashes all the received documents, and widely publishes the hash in a newspaper or in Usenet posts. The timestamp proves that the data must have existed at the time, obviously, in order to get into the hash. Each timestamp includes the previous timestamp in its hash, forming a chain, with each additional timestamp reinforcing the ones before it.

Ephemeral Publishing - see "Ephemeral Publishing", C. Castelluccia et al., http://code.google.com/p/ephpub/ - system uses the Domain Name System to store cryptographic keys. The keys are stored by forcing the insertion of domains in DNS caches. The entries are automatically removed from the cache by the DNS server once the TTL expired. Thus the cryptographic key is automatically forgotten after a while. This system does not address the problem of proving the existence of information at a certain time; it only focuses on the erasure of a key.

One known drawback of prior art time-stamping is the need of a trusted third party to provide both the reliable time and the processes for making and verifying the timestamps. This can cause trust issues and also reliability issues as the system fails if the third party becomes unavailable.

It will thus be appreciated that there is a need for a time-stamping solution that overcomes the problems of the prior art. The system of the present application provides such a solution.

### SUMMARY OF INVENTION

In a first aspect, the invention is directed to a method of timestamping data. A device generates at least one domain name from the data; sends a DNS resolution request for each of the generated domain names; and outputs a timestamp comprising a value based on the data.

In a first preferred embodiment, at least one domain name is further generated from a timestamping time.

In a second aspect, the invention is directed to a method of verifying a timestamp for data. A device generates at least one domain name from a timestamping time and a value based on the data; sends a DNS resolution request for each of the generated domain names; receives a resolution response for each sent DNS resolution request, each resolution response comprising a Time-to-Live value; retrieves a reference Time-to-Live value from each DNS server to which a DNS resolution request was sent; for each resolution response, compares a current time, the timestamping time, the received Time-to-Live value and the reference Time-to-Live value for the DNS server from which the resolution response was received; and determines that the timestamp is correct if at least a predetermined number of comparisons are correct.

In a third aspect, the invention is directed to a device for timestamping data. The device comprises a processor configured to: generate at least one domain name from the data; send a DNS resolution request for each of the generated domain names; and output a timestamp comprising a value based on the data *f*.

In a first preferred embodiment, the processor is configured to generated the at least one domain name further from a timestamping time. It is advantageous that the value based on the data is identical to the data. It is further advantageous that the processor is further configured to generate the at least one domain name by: using a one-way function on the data and the timestamping time to obtain an intermediate value; generating at least one IP address from the intermediate value; sending a DNS reverse-resolution request for each of the at least one IP addresses; and receiving a domain name in response to each DNS reverse-resolution request.

In a second preferred embodiment, the processor is further configured to select a DNS server by obtaining a numerical value from at least the data, and using the numerical value to select the DNS server from a list of DNS servers, wherein at least one of the DNS resolution request is sent to the selected DNS server.

In a third preferred embodiment, the processor is configured to force recursive resolution.

In a fourth aspect, the invention is directed to a device for verifying a timestamp for data. The device comprises a processor configured to: generate at least one domain name from a timestamping time and a value based on the data; send a DNS resolution request for each of the generated domain names; receive a resolution response for each sent DNS resolution request, each resolution response comprising a Time-to-Live value; retrieve a reference Time-to-Live value from each DNS server to which a DNS resolution request was sent; for each resolution response, compare a current time, the timestamping time, the received Time-to-Live value and the reference Time-to-Live value for the DNS server from which the resolution response was received; and determine that the timestamp is correct if at least a predetermined number of comparisons are correct.

In a first preferred embodiment, the processor is further configured to generate the at least one domain name by: obtaining an intermediate value; generating at least one IP address from the intermediate value; sending a DNS reverse-resolution request for each of the at least one IP addresses; and receiving a domain name in response to each DNS reverse-resolution request. It is advantageous that the intermediate value is obtained by using a one-way function on the data and the time.

In a second preferred embodiment, the processor is further configured to select a DNS server by obtaining a numerical value from at least the data, and using the numerical value to select the DNS server from a list of DNS servers, and to send at least one of the DNS resolution request to the selected DNS server.

In a fifth aspect, the invention is directed to a computable readable storage medium comprising stored instructions that when executed by a processor performs the method of the first aspect.

In a sixth aspect, the invention is directed to a computable readable storage medium comprising stored instructions that when executed by a processor performs the method of the second aspect.

### BRIEF DESCRIPTION OF DRAWINGS

Preferred features of the present invention will now be described, by way of non-limiting example, with reference to the accompanying drawings, in which
Figure 1 illustrates timestamping of digital data according to a preferred embodiment of the present invention;
Figure 2 illustrates verification of a timestamp according to a preferred embodiment of the present invention; and
Figure 3 illustrates a timestamping system according to a preferred embodiment of the present invention.

### DESCRIPTION OF EMBODIMENTS

The invention relates to reliable timestamping of digital data. The entity that makes the timestamp is called 'the owner' and the entity that checks the timestamp is called 'the verifier'.

Since the invention makes use of the Domain Name System (DNS), the necessary concepts will now be described.

**DNS resolution:** The DNS is a worldwide database that turns Fully Qualified Domain Names (FQDN), e.g. www.example.com, into its corresponding IP address, e.g. 192.0.43.10. This process is called the 'resolution'. An example is shown in the following shell session:
C:\ >nslookup
> www.example.com
Non-authoritative answer:
   Name: 192.0.43.10

**DNS reverse-resolution:** The DNS also performs the inverse operation, i.e. turning an IP address into its corresponding FQDN. This process is called the 'reverse-resolution'. An example is shown in the following shell session:
C:\ >nslookup
> 192.0.43.10
Name: www.example.com

**Top level Domain (TLD):** The top level domain is the root (the last part) of a FQDN. The TLD of www.example.com is '.com'. Some of the most popular TLD are '.com', and '.org'. An embodiment of the invention uses '.com'.

**Authoritative DNS:** The crucial constraints for the DNS are high availability and consistency. Therefore, the DNS is highly distributed over the world, with many local or regional replicas. A DNS server is said authoritative for a domain if it has the ability to define the corresponding IP addresses and other attributes such as the Time-To-Live (will be explained hereinafter). All other DNS servers are said non-authoritative. Non-authoritative DNS servers in a domain can only replicate the information from the domain's authoritative server in their local DNS cache for a period of time.

**DNS cache:** Each DNS server maintains a cache of DNS entries. When a resolution request is received by a server, it first checks if the requested domain is stored in its cache; if this is the case, the server directly responds. However, if the domain is not in the cache, then the server normally forwards the request to its hierarchical server that repeats the checking process. The hierarchical server that succeeds the resolution sends the response down the hierarchy towards the originating server. The subordinate DNS servers add the domain of the request to their caches.

**Recursive resolution:** It is possible for a client to specify in a DNS resolution request whether or not the server should forward the request to its hierarchical servers. If the server cache does not store the requested domain and if the server does not forward the request, then the server returns an empty response to the resolution request.

**DNS Time-To-Live:** A DNS server does not store the DNS entries in its cache indefinitely. Each entry is associated with a Time-To-Live (TTL) period that only an authoritative server can define. This TTL period will herein be called a 'reference TTL'. A typical value is 86400 seconds (one day) but values up to 7 days are supported. A non-authoritative server is allowed to replicate the resolution information until the TTL expires. When answering a resolution request, the non-authoritative server also returns the remaining TTL value. When the TTL value expires for an entry, the non-authoritative server no longer resolves requests for the entry. In order to respond to subsequent requests, the non-authoritative server must get the resolution again from the authoritative server.

The present invention makes use of the DNS features described hereinbefore The invention comprises to distinct but related parts: timestamping of digital data and the verification of an existing timestamp.

### Timestamping of digital data

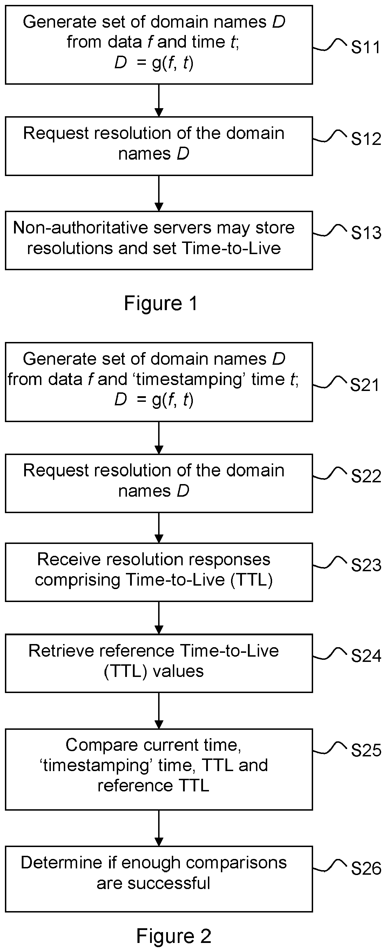

Figure 1 illustrates timestamping of digital data according to a preferred embodiment of the present invention. The owner p has data *f* that is to be timestamped with a time t. The owner uses S11 a deterministic one-way function *g* to generate a set of domain names *D*; *D* = *g*(*f,t*) - see hereinafter for details. The one-way function *g* binds the generated domain names D to the data *f* and the time t. The one-way function *g* is advantageously a cryptographic hash function, but it can also be a block cipher using Cipher Block Chaining (CBC).

The skilled person will appreciate that it is possible to generate the set of domain names D without using the time t. While this does not allow timestamping in the traditional sense, it can still allow an owner to prove that prior possession of the data (in particular if he renews the DNS resolutions regularly).

It is alternatively possible to include in the generation further data, such as a secret value.

The owner p resolves each of the domain names in D by sending DNS resolution requests to one or more DNS servers, step S12. The owner preferably forces recursive resolution by including this option in the DNS resolution requests. As an effect, DNS servers that does not cache a requested domain name will (when the response returns from the authoritative DNS server) add the domain name to their cache and set the TTL value, step S13. The DNS servers store the domain name in their caches until the TTL reaches 0, as defined in the DNS standard. It should be noted that a DNS server that already caches a domain name does not update the TTL value.

To avoid the impact of very popular DNS domains (e.g. google.com that is very likely cached everywhere) and to avoid collision between several DNS timestamps, the following is recommended:
- Requested DNS domains should be generated using a pseudorandom or cryptographic function.
- A plurality of resolution requests should be sent for one timestamp.
   The skilled person will appreciate that the reliability of the timestamp increases with the number of resolution requests. On the other hand, the resource use increases with the number or requests. Typical trade-offs result in e.g. 64, 128, 256 or 512 requests.
- The request should be spread over different DNS servers. This is in order to decrease the reliability on a single (or a few) DNS servers. It will be appreciated that the difficulty for the owner p (or another party) to "hack" the system increases with the number of servers. As the DNS servers often are independently operated, it is likely that control of one DNS server does not provide control of other DNS servers.

### Verification of an existing timestamp

Figure 2 illustrates verification of timestamp according to a preferred embodiment of the present invention. It is assumed that a verifier has retrieved the data *f* and the 'timestamping' time t, and has knowledge of the one-way function *g*. The verifier first calculates *D = g*(*f*,*t*) in the same way as the owner (i.e. possibly without the time *t* and possibly with further data), step S21. Then the verifier sends resolution requests for the calculated domain names to the same DNS servers as the owner p, step S22. For the domain name calculation, the verifier uses an algorithm that is equivalent to (preferably the same as) the algorithm used by the owner. It is preferred that the DNS infrastructure is publicly available since this makes the timestamping method (both the timestamping and the verification) public. When the verifier receives the resolution responses, it retrieves the remaining TTL for each domain name in D, step S23.

In addition the verifier retrieves the reference TTL values for each domain name in D, step 24. This is achieved by querying the authoritative servers for each domain.

The verifier then, step S25, compares the current time with the 'timestamping' time *t* and, for each domain name, the received reference TTL and the remaining TTL; i.e. the verifier checks if *current time* ≈ *t + (reference TTL - remaining TTL).*

The verifier finally, step S26, judges that verification succeeds if for at least a portion (1-ε) of the domain names out of D the difference between the reference TTL values and the remaining TTL values is consistent with the 'timestamping' time *t* provided with the proof. In other cases the verification is judged to be unsuccessful.

In case the timestamp does not include the time t, then the verification is preferably made by checking that the remaining TTL values (or *reference TTL - remaining TTL)* for at least a portion (1-ε) of the domain names out of D are at least roughly identical.

### Illustrative example

The following example illustrates the verification of a timestamp. The PERL command line results are:
Generate the timestamp for the text "You lost the game":
   Mon 06/20/2011 14h52:00> perl dnstamp.pl -text "You lost the game" - time "Mon 06/20/2011 14h52:00" -generate

In this example, the resolution requests are not shown, but it will be understood that two domain names are generated and that two resolution requests are sent by the owner and that the verifier sends two resolution requests for each verification attempt.

The number of seconds for each verification come from two different DNS servers and gives the 'age' of the timestamp. The slight variations (i.e. the variations in the differences between the two values, ranging between 4 and 19 seconds) may come from network delays or from minor synchronization differences; it will however be understood that such minor differences do not impact the confidence in the system as the reference TTL is much, much greater, 86400 seconds.

Verify the timestamp for the text "You lost the game" and the time:
Mon 06/20/2011 14h53:00> perl dnstamp.pl -text "You lost the game" - time "Mon 06/20/2011 14h52:00" -verify
   56 seconds
   37 seconds
Mon 06/20/2011 14h53:30> perl dnstamp.pl -text "You lost the game" - time "Mon 06/20/2011 14h52:00" -verify
   93 seconds
   80 seconds
Mon 06/20/201116h07:00> perl dnstamp.pl -text "You lost the game" - time "Mon 06/20/2011 14h52:00" -verify
   4453 seconds
   4449 seconds
Mon 06/27/2011 11h02:42> perl dnstamp.pl -text "You lost the game" - time "Mon 06/20/2011 14h52:00" -verify
   Expired
   Expired

It can be seen that the timestamp was performed at 14:52:00, that first verification, at 14:53:00, i.e. one minute after the timestamp, yields 'ages' of 56 and 37 seconds, respectively. Further, the verification at 14:53:30, i.e. 1,5 minutes after the timestamp, yields 'ages' of 93 and 80 seconds, respectively and that the verification at 16:07:00, i.e. 1 hour and 15 minutes (4500 seconds) after the timestamp, yields 'ages' of 4453 and 4449 seconds, respectively. The final example shows that the timestamp has expired; the verification was made almost 7 days after the creation of the timestamp and the reference TTL was 86400 seconds, i.e. one day.

### Preferred embodiment

### Timestamping

Here follows more details of the timestamping method of the present application. An example is used for illustration of the abstract points. In the example, a timestamp is generated on digital data *f* at time *t* and a single DNS server is used for the resolutions; naturally a plurality of DNS servers could be used.

Step 1: generate random domain names.
Step 1.1: compute α=*h*(*f.t*) where '.' denotes concatenation and h is a cryptographic hash function. In the example a 256-bit wide hash function, sha256, was used. α is thus a 256-bit number.
Step 1.2: eight IP addresses *A*₁-*A*₈ are generated from α: *A*₁ = α[1..32], *A*₂ = α[33..64],..., *A*₈ = α[224..256], where α[X..Y] denotes bits X to Y of α.
Step 1.3: send inverse resolutions requests for the eight IP addresses, *A*₁ to *A*₈. This generally results in eight FQDNs *D*₁,...,*D*₈ being returned to the owner.

Step 2: resolve FQDNs
Request the resolutions for the eight FQDNs *D*₁,...,*D*₈ by forcing recursive resolution. The queried domains are automatically added to the DNS server's cache and the maximum TTL values *TTLMaxD*₁,..., *TTLMaxD₈* are set by the DNS server unless the DNS server already caches the domain in question.

There are different ways of determining to which the resolution requests shall be sent.

A first option is to send all the requests to one or more pre-determined DNS servers. These servers could be 'standard' servers that always are used. In case more than one server is used, it is possible to send a pre-determined (possibly varying) number of resolution requests to each server, where the number may be one or a greater number.

A second option is for the owner to make the decision and attach the necessary information to the timestamp.

A third, preferred, option is to use information related to the data *f* to decide which DNS servers to use. The data *f* could for example be hashed (with or without the time t) one or more times to come up with a number of values. The values could then be mapped onto a list of DNS servers that are to be used for timestamping; the list could be included in the software program that performs the timestamp and in the software program that performs the verification thereof, but it could also be mapped onto a publicly available list of DNS servers. It is particularly advantageous to use the value α, either directly and/or as a seed. The data *f* could also be interpreted as a series of numbers that are mapped to such a list.

As an example, imagine that the list comprises 128 different DNS servers. If the value α (256 bits in the example) is used it may be split into e.g. 42 groups of 6 bits and the first 8 (or other desired number) of these may be used to select the DNS servers from the list.

The skilled person will appreciate that many other well-known alternatives for (quasi-)random selection of values from a seed are available.

### Sending proof

The owner publishes the data *f* and the time t. It should be noted that it is also possible to publish the value α (or the resulting IP addresses *A*₁-*A*₈) instead of *f*. The proof can be published to the world (in a newspaper or on the web), to a certain group (e.g. a social network) or directly to a verifier (e.g. by email). The details of the publication are beyond the scope of the invention.

### Verification

The verifier generates the same DNS resolution requests as the owner did during the timestamping, for example using α=*h*(*f*.*t*) and the generation of the IP addresses therefrom. The verifier sends the generated requests to the same DNS server (or, as the case may be, the same DNS servers) as the owner. To do so, the verifier uses the pre-determined DNS servers, retrieves the information from the timestamp or selects the DNS servers in the same way as the owner. In response, the verifier receives the remaining TTL values. The verifier also queries the corresponding authoritative servers in order to get the reference TTL values. The verification succeeds if the difference between the remaining TTL values and the reference TTL values is at least generally consistent with the time that has really passed since the timestamp. It will be appreciated that it is preferred to disregard the remaining TTL values that correspond to reference TTL values that are lower than the difference between the present time and the timestamping time t. More precisely:
Step 1: The verifier gets *f* and *t*. He computes the eight FQDN domains *D*₁,..., *D*₈ as in Step 1 of the timestamping method.
Step 2: The verifier resolves the eight domains using the authoritative server of the (or each) domain. The verifier stores the returned maximum TTL values *TTLMaxD*₁..., *TTLMaxD₈* for each domain.
Step 3: The verifier resolves the eight domains using the standard DNS server, i.e. the same as the owner. The DNS server returns the decremented TTL *TTLD*₁...,*TTLD*₈ for each entry. It should be noted that unless the TTL has expired, the DNS server stores all these entries as these were cached in response to the owners requests, but, as mentioned hereinbefore, the cache entry is not updated if it already existed at the time of the owners request. This may cause the DNS server to return lower TTLD values than expected; which is one of the reasons why it is important to use multiple requests.
Step 4: The verifier now calculates the difference for each domain: *TTLMaxD*₁ - *TTLD*₁..., *TTLMaxD*₈ - *TTLD*₈. If most resulting values are equal (minor differences are tolerated) and if the elapsed time is consistent with the announced time *t* the proof succeeded. The tolerance for the time and the required ratio of consistent times is up to the verifier to decide; for example time differences of 10 seconds or 600 seconds (10 minutes) may be tolerated and at least a fourth, a third or half of the times may be required to be consistent to trust the timestamp.

### Variant embodiments

### Using a dedicated domain

Instead of randomly choosing IP addresses during timestamping, one or more given domains, such as "example.com", could be used. This makes it possible to know in advance which the authoritative server of the domain is.

To achieve this, the random function *h*(*f*.*t*) still returns a set of n random strings S₁...Sₙ and the resolution request are generated using the FQNDs S₁.example.com,..., Sₙ.example.com.

### Additional information for the verifier

In the preferred embodiment, the verifier ends up with the following information: "the proof is valid" or "the proof is not valid". This can be extended in a more verbose mode that gives precisions about for example the shortest TTL in the timestamping process, the longest TTL, the average value of TTL_{S}, and combinations thereof.

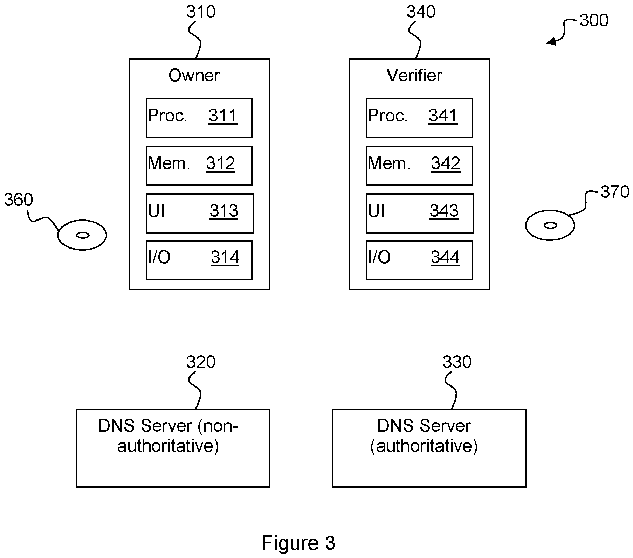

Figure 3 illustrates a timestamping system 300 according to a preferred embodiment of the present invention. The system 300 comprises an owner device 310 and a verifier device 340, each comprising at least one processor 311, 341, memory 312, 342, preferably a user interface 313, 343, and at least one input/output unit 314, 344. Both the owner device 310 and the verifier device 340 may for example be a personal computer, a workstation, a television set, a tablet, a smartphone, and a set-top box.

The owner device 310 is configured to timestamp data according to any embodiment of the timestamping method described herein and the verifier device 340 is configured to verify a timestamp according to any embodiment of the verification method described herein.

The system 300 also comprises a non-authoritative DNS server 320 and an authoritative DNS server 330. It will however be appreciated that while these servers perform a part of the methods, their functionality is not modified by the present invention.

A first computable readable storage medium 360 comprises stored instructions that when executed by the processor 311 of the owner device 310 timestamps data as described. A second computable readable storage medium 370 comprises stored instructions that when executed by the processor 341 of the verifier device 340 verifies a timestamp as described.

It will be appreciated that the present solution does not require that the owner and the verifier share information prior to the timestamping operations. In particular, the owner and the verifier do not need to trust one common timestamping authority, one common certificate authority, one common Network Time Protocol server, etc.

It will also be appreciated that the present solution can allow massive public verification. First, the owner publishes the proof elements, for instance on a web site. Then, anyone connected to the Internet may verify the timestamp (until it 'expires'). Since the DNS system has a very high availably and since the present solution can use many different DNS servers, many verifiers can proceed at the same time.

It will further be appreciated that the requests according to the present solution appear as normal requests to DNS servers. Moreover, the DNS servers are preferably selected randomly; thus, a malicious DNS server, different from the owner's primary server, has no advantage in attacking a timestamp.

A timestamp of the present invention typically requires dozens of DNS requests, which is comparable to the number of requests generated by normal web surfing. Even if massively used, the invention does not induce more than negligible overhead for the overall DNS system.

Further, the invention can allow reliable timestamping even in the absence of a trusted third party. The only requirement is that all participants have access to the Internet Domain Name System (DNS). As there is no Single Point Of Failure (SPOF) and no need of pre-existing trust, the inventions allows for large scale timestamping use cases, involving very large number of users in a very large number of places over the world.

However, due to present limitations of the DNS, the invention is at present limited to a validity of at most 7 days for the timestamp, although this limitation is does not apply to the variant where the timestamp does not include the time t.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of timestamping data *f*, the method comprising the steps, in a device (310), of:
generating (S11) at least one domain name D from the data *f*;
sending (S12) a DNS resolution request for each of the generated domain names D; and
outputting a timestamp comprising a value based on the data *f*.

2. The method of claim 1, wherein the at least one domain name D is further generated from a timestamping time t.

3. A method of verifying a timestamp for data *f*, the method comprising the steps, in a device (340), of:
generating (S21) at least one domain name D from a timestamping time *t* and a value based on the data *f*,
sending (S22) a DNS resolution request for each of the generated domain names D;
receiving (S23) a resolution response for each sent DNS resolution request, each resolution response comprising a Time-to-Live value;
retrieving (S24) a reference Time-to-Live value from each DNS server to which a DNS resolution request was sent;
for each resolution response, comparing (S25) a current time, the timestamping time t, the received Time-to-Live value and the reference Time-to-Live value for the DNS server from which the resolution response was received; and
determining (S26) that the timestamp is correct if at least a predetermined number of comparisons are correct.

4. A device (310) for timestamping data f, the device comprising a processor (311) configured to:
generate at least one domain name D from the data *f*;
send a DNS resolution request for each of the generated domain names D; and
output a timestamp comprising a value based on the data *f*.

5. The device of claim 4, wherein the processor is configured to generated the at least one domain name D further from a timestamping time t.

6. The device of claim 5, wherein the value based on the data *f* is identical to the data *f*.

7. The device of claim 6, wherein the processor (311) is further configured to generate the at least one domain name by:
using a one-way function on the data *f* and the timestamping time *t* to obtain an intermediate value;
generating at least one IP address from the intermediate value;
sending a DNS reverse-resolution request for each of the at least one IP addresses; and
receiving a domain name in response to each DNS reverse-resolution request.

8. The device of claim 4, wherein the processor is further configured to select a DNS server by obtaining a numerical value from at least the data *f*, and using the numerical value to select the DNS server from a list of DNS servers, wherein at least one of the DNS resolution request is sent to the selected DNS server.

9. The device of claim 4, wherein the processor is configured to force recursive resolution.

10. A device (340) for verifying a timestamp for data *f*, the device (340) comprising a processor (341) configured to:
generate at least one domain name D from a timestamping time *t* and a value based on the data *f*;
send a DNS resolution request for each of the generated domain names D;
receive a resolution response for each sent DNS resolution request, each resolution response comprising a Time-to-Live value;
retrieve a reference Time-to-Live value from each DNS server to which a DNS resolution request was sent;
for each resolution response, compare a current time, the timestamping time t, the received Time-to-Live value and the reference Time-to-Live value for the DNS server from which the resolution response was received; and
determine that the timestamp is correct if at least a predetermined number of comparisons are correct.

11. The device of claim 10, wherein the processor (341) is further configured to generate the at least one domain name by:
obtaining an intermediate value;
generating at least one IP address from the intermediate value;
sending a DNS reverse-resolution request for each of the at least one IP addresses; and
receiving a domain name in response to each DNS reverse-resolution request.

12. The device of claim 11, wherein the intermediate value is obtained by using a one-way function on the data *f* and the time t.

13. The device of claim 10, wherein the processor (341) is further configured to select a DNS server by obtaining a numerical value from at least the data *f*, and using the numerical value to select the DNS server from a list of DNS servers, and to send at least one of the DNS resolution request to the selected DNS server.

14. A computable readable storage medium (360) comprising stored instructions that when executed by a processor performs the method of claim 1 or 2.

15. A computable readable storage medium (370) comprising stored instructions that when executed by a processor performs the method of claim 3.
